# EUROPÄISCHE PATENTSCHRIFT

(11) **EP 1 419 544 B1**
(45) Veröffentlichungstag und Bekanntmachung des Hinweises auf die Patenterteilung: **05.01.2005**
(21) Anmeldenummer: 02797544.0
(22) Anmeldetag: 20.08.2002
(51) Int. Cl.: H01M 2/16, B01D 71/02, B01D 69/10, B01D 69/12

(54) **ELEKTRISCHER SEPARATOR, VERFAHREN ZU DESSEN HERSTELLUNG UND VERWENDUNG**
ELECTRIC SEPARATOR, METHOD FOR PRODUCING THE SAME AND THE USE THEREOF
SEPARATEUR ELECTRIQUE, PROCEDE DE PRODUCTION ET UTILISATION DE CE SEPARATEUR

(30) Priorität: 31.08.2001 DE 10142622
(43) Veröffentlichungstag der Anmeldung: 19.05.2004
(73) Patentinhaber: Creavis Gesellschaft für Technologie und Innovation mbH, 45772 Marl (DE)
(72) Erfinder: HENNIGE, Volker, 48249 Dülmen (DE); HYING, Christian, 46414 Rhede (DE); HÖRPEL, Gerhard, 48301 Nottuln (DE)
(74) Vertreter: Lang, Arne, Dr.
(86) Internationale Anmeldenummer: PCT/EP2002/009266
(87) Internationale Veröffentlichungsnummer: WO 2003/021697

(56) Entgegenhaltungen:
- EP-A- 0 121 771
- WO-A-99/15262
- WO-A-99/57769
- US-A- 3 816 242
- US-A- 5 455 206
- US-A- 5 885 657

## Beschreibung

Ein elektrischer Separator ist ein Separator, der in Batterien und anderen Anordnungen, in denen Elektroden z. B. unter Aufrechterhaltung von Ionenleitfähigkeit voneinander separiert werden müssen, eingesetzt wird.

Der Separator ist ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren. Ausserdem muss er dauerelastisch sein und den Bewegungen im System, z. B. im Elektrodenpaket beim Laden und Entladen, folgen.

Der Separator bestimmt massgeblich die Lebensdauer der Anordnung, in der er verwendet wird, z. B. die von Batterie-Zellen. Die Entwicklung einer wiederaufladbaren Batterie mit Lithium Elektrode (negative Masse) ist wünschenswert. Hierfür eignen sich jedoch käufliche Separatoren nicht.

Allgemeine Informationen über elektrische Separatoren und Lithium-Ionen-Batterien können z. B. bei J. O.Besenhard in "Handbook of Battery Materials"; VCH-Verlag, Weinheim 1999, (Kap. 10 Seite 553 ff.) und bei Wakihara und Yamamoto in "Lithium Ion Batteries" Wiley-VCH-Verlag, Weinheim 1998, nachgelesen werden.

Derzeitig eingesetzte Separatoren in Litium-Ionen-Zellen (-Batterien) bestehen überwiegend aus porösen organischen Polymerfilmen. Diese werden von verschiedenen Firmen entweder nach dem Trocken- oder dem Nass-Verfahren hergestellt. Wichtigste Produzenten sind hier: Celgard, Tonen, Ube, Asahi und Mitsubishi.

Alle von diesen Firmen hergestellten Separatoren für Li-Ionen-Zellen basieren auf den Polyolefinen Polyethylen (PE) oder Polypropylen (PP). Dies sind auch die Separatormaterialien, welche sich in allen marktgängigen Lithium-Batterien befinden. Wobei hier und im Folgenden unter Batterien sekundäre und primäre Lithium-Batteriesysteme zu verstehen sind.

Andere mögliche Separatormaterialien sind Vliese aus Glas- oder Keramik-Materialien oder auch Keramikpapiere. Diese Materialien werden zur Zeit aber aufgrund ihrer schlechten maschinellen Verarbeitbarkeit in keinen kommerziell verfügbaren Batteriesystemen eingesetzt.

Nachteile der organischen Polyolefinseparatoren sind deren relativ geringe thermische Belastbarkeit von deutlich unter 150°C sowie ihre geringe chemische Stabilität in anorganischen Batteriezellen. Die verwendeten Polyolefine werden in den Li-Batterien langsam durch das Li angegriffen. Wobei es bei Systemen mit einem Polymerelektrolyten zur Bildung einer dichten Oxidationsproduktschicht kommt. Diese verhindert die weitere Zerstörung des Separators in Li-Ionen-Batterien.

Für die Fertigung von Hochenergiebatterien bzw. Hochleistungsbatterien kann man keine Polymerelektrolyten mehr nutzen, da diese eine zu geringe Leitfähigkeit bei den entsprechenden Betriebstemperaturen besitzen. In diesen Batteriesystemen verwendet man nicht wässrige und nicht polymere Elektrolyte wie z. B. flüssiges Schwefeldioxid. In diesen Elektrolyten sind Polymerseparatoren aber chemisch nicht beständig, so dass diese nach einiger Zeit zerstört werden. Daher werden in diesen Systemen anorganische Separatoren (Glasvlies, Keramikvlies und Keramikpapier) mit den bekannten Nachteilen eingesetzt. Diese bestehen insbesondere darin, dass anorganische Keramik- oder Glasvliese nicht maschinell zu gewickelten Zellen verarbeitet werden können (da sie bei den vorgegebenen Zugspannungen immer zerreißen). Keramikpapiere sind sehr spröde und können aus diesem Grund nicht gewickelt werden bzw. zu gewickelten Zellen verarbeitet werden. Man beschränkt sich daher auf die Herstellung von prismatischen Zellen, bei denen die Elektroden/Separatoren nicht gewickelt sondern gestapelt werden. In dieser Anordnung ist es auch nicht notwendig, dass die Materialien entsprechend reißfest sind.

Es gibt erste Versuche anorganische Verbundmaterialien als Separatoren einzusetzen. So wird in DE 198 38 800 ein elektrischer Separator, der ein flächiges, mit einer Vielzahl von Öffnungen versehenes, flexibles Substrat mit einer darauf befindlichen Beschichtung umfaßt, welcher dadurch gekennzeichnet ist, dass das Material des Substrates ausgewählt ist unter Metallen, Legierungen, Kunststoffen, Glas und Kohlefaser oder einer Kombination solcher Materialien und die Beschichtung eine flächig durchgehende, poröse, elektrisch nicht leitende keramische Beschichtung ist. Die Separatoren, die einen Support aus elektrisch leitendem Material aufweisen (wie im Beispiel angegeben), haben sich allerdings als ungeeignet für Lithium-Ionen-Zellen herausgestellt, da die Beschichtung in der beschriebenen Dicke nicht großflächig fehlerfrei hergestellt werden kann und es somit sehr leicht zu Kurzschlüssen kommen kann. Ein Support aus Kunststoff löst sich hingegen auf, da der Elektrolyt mit dem Substrat in Kontakt kommt.

In der WO-9915262-A werden Verbundmaterialen offenbart, die unter anderem faserförmige Substrate aus Glas oder Keramik verwenden. Die Substrate werden mit einer anorganischen Beschichtung versehen. Unter anderem ist eine Verwendung der Verbundmaterialien als Batterieseparatoren erwähnt.

Zusammenfassend lässt sich feststellen, dass zur Zeit kein geeignetes Separatormaterial vorliegt, mit dem man gewickelte anorganische Hochleistungs- bzw. Hochenergiebatterien kostengünstig produzieren kann.

Aufgabe der Erfindung war es daher einen flexiblen, mechanisch stabilen und in Verbindung mit dem Elektrolyten einen geringen Widerstand aufweisenden Separator für Hochleistungsund Hochenergiebatterien bereitzustellen, der biegbar ist und maschinell zu Wickelzellen verarbeitbar ist. Zudem soll er in anorganischen Batteriesystemen auch eine entsprechend gute Langzeitbeständigkeit gegenüber allen Batteriekomponenten (Elektrolyten, Leitsalzen, Überladeprodukten oder Lithium und ähnliches) besitzen.

Überraschenderweise wurde gefunden, dass ein elektrischer Separator, der ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten , nicht elektrisch leitfähigen Fasern von Glas und die Beschichtung eine poröse, elektrisch isolierende, keramische Beschichtung ist, und der eine Dicke von kleiner 100 µm aufweist, biegbar ist, einen in Verbindung mit dem Elektrolyten genügend geringen Widerstand aufweist und trotzdem eine ausreichend große Langzeitbeständigkeit aufweist.

Gegenstand der vorliegenden Erfindung ist deshalb ein elektrischer Separator gemäß Anspruch 1, umfassend ein flächiges, mit einer Vielzahl von Öffnungen versehenes, flexibles Substrat mit einer auf und in diesem Substrat befindlichen Beschichtung, wobei das Material des Substrates ausgewählt ist aus gewebten , nicht elektrisch leitfähigen Fasern von Glas und die Beschichtung eine poröse, elektrisch isolierende, keramische Beschichtung ist, der dadurch gekennzeichnet ist, dass der Separator eine Dicke von kleiner 100 µm aufweist.

Ebenfalls Gegenstand der vorliegenden Erfindung ist ein Verfahren gemäß Anspruch 9 zur Herstellung eines Separators gemäß zumindest einem der Ansprüche 1 bis 8, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist.

Im allgemeinen kann festgestellt werden, dass je größer die Poren sind um so niedriger der sich einstellende Widerstand ist. Zudem kann durch die Wahl geeigneter Partikel die Porosität des Separators beeinflusst werden, was in gleicher Weise zu geänderten Eigenschaften führt. Eine häufig in diesem Zusammenhang benutzte Kenngröße eines Separators ist die Gurley-Zahl. Sie ist ein Maß für die Gasdurchlässigkeit des trockenen porösen Separators. Wie von O. Besenhard im "Handbook of Battery Materials" beschrieben, kann man direkt aus der Gurley Zahl auf die Leitfähigkeit eines bekannten Systems schliessen. Verallgemeinert kann man festhalten, dass eine größere Gasdurchlässigkeit (Gurley-Zahl) eine um so höhere Leitfähigkeit des benetzten Separators in der Batteriezelle bewirkt. Die Werte der Gurley-Zahl kommerziell erhältlicher Separatoren liegen bei 10, wenn der Porendurchmesser um 0,1 µm beträgt, und bei 30, wenn der Porendurchmesser um 0,05 µm beträgt. (G. Venugiopal; J. of Power Sources 77 (1999) 34 - 41)

Es ist aber immer zu beachten, dass ein außergewöhnlich großer Wert der Gurley-Zahl auch auf Defekte, also große Löcher, im Separator hindeuten kann. Diese Defekte können beim Betrieb einer Batterie zu einem inneren Kurzschluss führen. Die Batterie kann sich dann in einer gefährlichen Reaktion sehr schnell selbst entladen. Hierbei treten dann so große elektrische Ströme auf, dass eine geschlossene Batteriezelle im ungünstigsten Fall sogar explodieren kann. Aus diesem Grund kann der Separator entscheidend zur Sicherheit einer Lithium-Batterie beitragen bzw. zur fehlenden Sicherheit beitragen. Daher ist der Separator ein entscheidendes Bauteil in einer Batterie dem man sehr großes Augenmerk widmen muss.

Polymerseparatoren bringen die zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion die zur Explosion führen kann, zum erliegen. Wird die Zelle aufgrund äußerer Umstände aber weiter erwärmt, so wird bei ca. 150 bis 180 °C die Break-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle endet, bzw. der entstehende Druck wird durch ein Überdruckventil (eine Berstscheibe) häufig unter Feuererscheinungen abgebaut.

Bei dem erfindungsgemäßen anorganischen Separator kommt es nicht zu diesen zwei Effekten. Das hat den Vorteil, dass Batteriezellen bei höheren Temperaturen betrieben werden können, ohne dass Sie dadurch geschädigt werden (Shut-Down) oder eine Sicherheitsgefahr darstellen. Der anorganische Separator kann nicht schmelzen und somit kann es auch niemals zu einem großflächigem inneren Kurzschluss in einer Zelle kommen.

Gleiches gilt auch bei einem inneren Kurzschluss, der durch einen Unfall verursacht wurde. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Der erfindungsgemäße anorganische Separator schmilzt nicht. Somit läuft die Reaktion im Inneren der Zelle nach einem solchen Unfall sehr viel moderater ab. Diese Zelle ist somit deutlich sicherer als eine mit Polymerseparator. Dies kommt vor allem im mobilen Bereich, wie z. B. im Kraftfahrzeugbereich, zum Tragen.

Höhere erlaubte Betriebstemperaturen sind für Lithium-Batterien in Anwendungen wie z. B. tragbaren Rechnern (Notebooks oder -pads) oder Telefonen (Handys) nicht notwendig und auch nicht wünschenswert. Anders sieht dies allerdings im mobilen Bereich aus.

Im Kfz-Bereich versucht man zur Umwelt- und Ressourcenschonung dadurch beizutragen, dass der Benzinverbrauch der Kfz immer weiter gesenkt wird. Eine relativ effiziente Methode in diesem Zusammenhang ist die Zwischenspeicherung der Bremsenergie. Dies kann bei Hybridfahrzeugen, die einen batteriebetriebenen elektrischen (Zusatz-)Antrieb und eine Brennstoffzelle, einen Otto-, Diesel- oder sonstigen Motor besitzen, oder bei Elektrofahrzeugen durch Rückspeisung der Bremsenergie in die Batterie geschehen. Dabei werden innerhalb sehr kurzer Zeiten sehr große Energiemengen eingespeist, was zu einer kurzzeitigen starken Erhöhung der Temperatur in der Batterie führen kann. Bei Verwendung von Polymerseparatoren kann die Rückspeisung nur erfolgen, wenn die Temperatur einer jeden Zelle genauestens überwacht wird und die Einspeisung bei Überschreiten einer relativ niedrigen Temperaturgrenze unterbrochen wird. Bei Verwendung des anorganischen Separators ist die Unterbrechung nicht notwendig, da keine negativen Auswirkungen der hohen Temperatur auf den Separator zu befürchten sind. Dadurch kann die gesamte Bremsenergie in die Batterie eingespeist werden und nicht nur ein Teil wie bei Polymerseparatoren. Gleiches gilt natürlich auch bei der Schnellladefähigkeit der Batterien mit dem anorganischen Separator. Diese sind dann schnellladefähig. Dies ist ein deutlicher Vorteil beim Einsatz in Elektrofahrzeugen, da diese nicht mehr über 12h oder noch längere Zeiträume geladen werden müssen, sondern dies innerhalb von deutlich kürzeren Zeiträumen durchführbar ist.

Durch die erfindungsgemäße Dicke von kleiner 100 µm der elektrischen Separatoren der vorliegenden Erfindung ist der elektrische Widerstand beim Einsatz des Separators deutlich geringer als bei bis jetzt bekannten Separatoren. Trotz der geringen Dicke weist der erfindungsgemäße Separator eine genügend große Festigkeit (Reißfestigkeit) von mehr als 10N, bevorzugt von mehr als 25N und ganz besonders bevorzugt von mehr als 50N auf und ist flexibel. Die Reißfestigkeit liegt für kommerzielle Polymerseparatoren bei ca. 50N (in Maschinenrichtung) und bei 5N quer zur Maschinenrichtung. (G. Venugopal; J. of Power Sources 77 (1999) 34 - 41).

Der erfindungsgemäße Separator wird im folgenden beschrieben, ohne dass die Erfindung auf diesen beschränkt sein soll.

Die erfindungsgemäßen elektrischen Separatoren, umfassen ein flächiges, mit einer Vielzahl von Öffnungen versehenes, flexibles Substrat mit einer auf und in diesem Substrat befindlichen Beschichtung, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist. Der Separator weist eine Dicke von kleiner 100 µm, vorzugsweise von kleiner 75 µm und ganz besonders bevorzugt kleiner 50 µm auf.

Durch die geringe Dicke wird ein besonders geringer elektrischer Widerstand des Separators in der Anwendung mit einem Elektrolyten erzielt. Der Separator selbst weist natürlich einen unendlich hohen Widerstand auf, da er selbst isolierende Eigenschaften aufweisen muß.

Damit ein Separator mit isolierenden Eigenschaften erhalten werden kann, weist dieser als Material für das Substrat vorzugsweise nicht elektrisch leitfähige Fasern, ausgewählt aus Glas, Aluminiumoxid, SiO₂, SiC, Si₃N₄, BN, B₄N, AlN, Sialone oder ZrO₂ auf.

Das Material des Substrates besteht als Gewebe aus nicht elektrisch leitenden Fasern . Damit ein gleichmäßiger Widerstand in der Anwendung mit einem Elektrolyten erzielt werden kann, ist das Material des Substrates ein Glasfasergewebe aus gleichmäßig gewebten Fasern aus Glas. Auf diese Weise wird ein bezogen auf die Fläche des Separators gleichmäßiger Widerstand in der Anwendung mit einem Elektrolyten erreicht. Bei der Verwendung eines nicht gewebten Glasfasermaterials kann es vorkommen, dass es auf der Separatorfläche zu Bereichen kommt die einen größeren und andere Bereiche die einen kleineren Widerstand in Anwendung mit dem Elektrolyten aufweisen. Eine solche unregelmäßige Widerstandsverteilung über die Oberfläche würde einen unnötigen Leistungsverlust in der Batterie zur Folge haben.

Vom Prinzip sind alle als Fasern erhältlichen Glasmaterialien, wie z. B. E-, A-, E-CR-, C-, D-, R-, S- und M-Glas für das Substrat einsetzbar. Vorzugsweise werden Fasern aus E-, R- oder S-Glas eingesetzt. Die bevorzugten Glassorten weisen einen geringen Gehalt an BaO, Na₂O oder K₂O auf. Vorzugsweise weisen die bevorzugten Glassorten einen Gehalt an BaO von kleiner 5 Gew.-%, ganz besonders bevorzugt kleiner 1 Gew.-%, einen Gehalt an Na₂O von kleiner 5 Gew.-%, ganz besonders bevorzugt kleiner 1 Gew.-% und einen Gehalt an K₂O von kleiner 5 Gew.-%, ganz besonders bevorzugt kleiner 1 Gew.-% auf. Es kann vorteilhaft sein, wenn die Fasern aus Glassorten bestehen, die keine der Verbindungen BaO, Na₂O oder K₂O aufweisen, wie z. B. E-Glas, da solche Glassorten beständiger gegenüber den als Elektrolyten eingesetzten Chemikalien sind.

In einer besonders bevorzugten Ausführungsart des erfindungsgemäßen Separators weist das Substrat Fasern bzw. Filamenten, besonders bevorzugt Glasfasern bzw. Galsfilamente aus E-bzw. S-Glas auf, die mit SiO₂, Al₂O₃ oder ZrO₂ oder mit Gemischen dieser Oxide beschichtet sind.

Der erfindungsgemäße Separator weist als Substrat ein Glasfasergewebe auf. Diese sind aus Fäden mit einer Stärke von maximal 20 tex (mg/m), vorzugsweise aus Fäden mit einer Stärke von maximal 10 tex und ganz besonders bevorzugt aus Fäden mit einer Stärke von maximal 5,5 tex hergestellt worden. Ganz besonders bevorzugt weist das Substrat ein Glasfasergewebe auf, welches aus Fäden mit einer Stärke von 5,5 oder 11 tex hergestellt wurde. Die einzelnen Filamente (oder Fasern) solcher Fäden weisen z. B. einen Durchmesser von 5 bis 7 µm auf. Das vorzugsweise als Support eingesetzte Glasfasergewebe weist von 5 bis 30 Schussfäden/cm und von 5 bis 30 Kettfäden/cm, vorzugsweise von 10 bis 30 Schussfäden/cm und von 10 bis 30 Kettfäden/cm und ganz besonders bevorzugt von 15 bis 25 Schussfäden/cm und von 15 bis 25 Kettfaden/cm auf. Durch die Verwendung solcher Glasgewebe kann sichergestellt werden, dass der Separator eine genügend große Festigkeit bei gleichzeitig genügend großer Porosität des Substrates aufweist.

Der erfindungsgemäße Separator weist eine poröse, elektrisch isolierende Beschichtung auf. Vorzugsweise weist der Separator eine Porosität von 10 % bis 50 %, bevorzugt von 15 % bis 50 % und besonders bevorzugt von 25 % bis 40 % auf. Die auf und in dem Substrat befindliche Beschichtung weist ein Oxid der Metalle Al, Zr, Si, Sn, Ce und/oder Y, vorzugsweise ein Oxid der Metalle Al, Si und/oder Zr auf.

Die erfindungsgemäßen Separatoren zeichnen sich dadurch aus, dass sie eine Reißfestigkeit von größer 5, vorzugsweise von 20 bis 500 N/cm und ganz besonders bevorzugt von größer 50 N/cm aufweisen können. Die erfindungsgemäßen Separatoren lassen sich vorzugsweise ohne Beschädigung bis auf einen Radius bis herab zu 500 mm, vorzugsweise bis herab zu 100 mm, besonders bevorzugt bis herab zu 25 mm und ganz besonders bevorzugt bis herab zu 5 mm biegen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird.

Der erfindungsgemäße Separator ist vorzugsweise erhältlich durch ein Verfahren zur Herstellung eines Separators, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist.

Die Beschichtung wird auf das Substrat vorzugsweise durch Aufbringen einer Suspension, die zumindest eine, eine Verbindung zumindest eines Metalls, eines Halbmetalls oder eines Mischmetalls mit zumindest einem Element der 3. bis 7. Hauptgruppe aufweisende, anorganische Komponente und ein Sol aufweist, auf das Substrat und durch zumindest einmaliges Erwärmen, bei welchem die zumindest eine anorganische Komponente aufweisende Suspension auf oder im oder aber auf und im Träger verfestigt wird, aufgebracht. Das Verfahren selbst ist aus WO 99/15262 bekannt, jedoch lassen sich nicht alle Parameter bzw. Einsatzstoffe, insbesondere nicht elektrisch leitfähige Einsatzstoffe, für die Herstellung des erfindungsgemäßen Separators einsetzen. Aufgrund der Auswahl der Einsatzstoffe ergeben sich auch bestimmte Verfahrensparameter, die für die ausgewählten Materialkombinationen erst gefunden werden mußten.

Die Suspension kann z. B. durch Aufdrucken, Aufpressen, Einpressen Aufrollen, Aufrakeln, Aufstreichen, Tauchen, Spritzen oder Aufgießen auf und in das Substrat gebracht werden.

Das Material des Substrates ist Glas.

Das Material des Substrates besteht als Gewebe aus nicht elektrisch leitenden Fasern. Damit ein gleichmäßiger Widerstand in der Anwendung mit einem Elektrolyten erzielt werden kann, wird ein Glasfasergewebe aus gewebten Fasern aus Glas als Material des Substrates eingesetzt.

Vom Prinzip sind alle als Fasern erhältlichen Glasmaterialien, wie z. B. E-, A-, E-CR-, C-, D-, R-, S- und M-Glas für den Support einsetzbar. Vorzugsweise werden Fasern aus E-, R- oder S-Glas eingesetzt. Die bevorzugten Glassorten weisen einen geringen Gehalt an BaO, Na₂O oder K₂O auf. Vorzugsweise weisen die bevorzugten Glassorten einen Gehalt an BaO von kleiner 5 Gew.-%, besonders bevorzugt kleiner 1 Gew.-%, einen Gehalt an Na₂O von kleiner 5 Gew.-%, besonders bevorzugt kleiner 1 Gew.-% und einen Gehalt an K₂O von kleiner 5 Gew.-%, besonders bevorzugt kleiner 1 Gew.-% auf. Es kann vorteilhaft sein, wenn die Fasern aus Glassorten bestehen, die keine der Verbindungen BaO, Na₂O oder K₂O aufweisen, wie z. B. E-Glas, da solche Glassorten beständiger gegenüber den als Elektrolyten eingesetzten Chemikalien sind.

In einer besonders bevorzugten Ausführungsart des erfindungsgemäßen Separators sind die Fasern, besonders bevorzugt die Glasfasern aus E- bzw. S-Glas, des Substrates mit SiO₂, Al₂O₃ oder ZrO₂ oder mit Gemischen dieser Oxide beschichtet. Eine solche Beschichtung kann z. B. dadurch aufgebracht werden, dass Tetraethylorthosilikat (TEOS) auf die Fasern, einzeln oder in Form von Gewebe, aufgebracht wird, das TEOS getrocknet wird und anschließend bei einer Temperatur von 400 bis 500 °C, vorzugsweise bei 430 bis 470 °C und ganz besonders bevorzugt bei 445 bis 455 °C das TEOS gebrannt wird. Beim Brennen bleibt als Rückstand auf der Faseroberfläche Siliziumdioxid zurück. Es konnte festgestellt werden, dass auf diese Weise behandelte Fasern wesentlich besser als Substratmaterial geeignet sind als unbehandelte Fasern, da die anschließende Beschichtung auf den behandelten Fasern wesentlich besser haftet und damit die Langzeitstabilität aber auch die Biegsamkeit des Separators deutlich verbessert wird. Auf die gleiche Weise können Beschichtungen mit ZrO₂ oder Al₂O₃ auf die Faseroberfläche aufgebracht werden, wobei als Einsatzstoff für die Herstellung einer ZrO₂-Beschichtung z. B. Zirkonacetylacetonat in Ethanol und für die Herstellung einer Al₂O₃-Beschichtung z. B. Aluminiumethanolat in Ethanol eingesetzt werden kann.

Es wird als Substrat ein Glasfasergewebe, verwendet, das aus Fäden mit einer Stärke von maximal 20 tex (mg/m), vorzugsweise aus Fäden mit einer Stärke von maximal 10 tex und ganz besonders bevorzugt aus Fäden mit einer Stärke von maximal 5,5 tex hergestellt wurden. Ganz besonders bevorzugt wird als Substrat ein Glasfasergewebe verwendet, welches aus Fasern mit einer Stärke von 5,5 oder 11 tex hergestellt wurde.

Die einzelnen Filamente der Fäden weisen z. B. einen Durchmesser von 5 bis 7 µm auf. Das als Substrat eingesetzte Glasfasergewebe weist von 5 bis 30 Schussfäden/cm und von 5 bis 30 Kettfäden/cm, vorzugsweise von 10 bis 30 Schussfäder/cm und von 10 bis 30 Kettfäden/cm und ganz besonders bevorzugt von 15 bis 25 Schussfäden/cm und von 15 bis 25 Kettfäden/cm auf. Durch die Verwendung solcher Glasgewebe kann sichergestellt werden, dass der Separator eine genügend große Festigkeit bei gleichzeitig genügend großer Porosität des Substrates aufweist.

Bei der Verwendung von käuflichen Glasfasergeweben konnte außerdem festgestellt werden, dass das Entfernen der Schlichte, die beim Herstellprozeß des Glasfasertextils auf die Fasern aufgebracht werde, einen großen Einfluß auf die Belastbarkeit des Glasfasertextils hat. Üblicherweise wird die Schlichte durch Aufheizen des Glasfasergewebes, auf 500 °C und anschließendes thermisches Behandeln des Textils bei > 300 °C für mehrere Stunden bis Tage entfernt. Überraschenderweise wurde festgestellt, dass ein so behandeltes Glasfasertextil wesentlich spröder als Glasfasertextil, welches die Schlichte noch aufweist, ist. Auf und in ein Glasfasertextil als Substrat, welches die Schlichte aufweist, läßt sich allerdings nur schlecht die erfindungsgemäße Beschichtung aufbringen, da diese durch die Schlichte an dem Textil schlechter haftet. Es wurde überraschenderweise gefunden, dass ein Abbrennen der Schlichte bei Temperaturen unter 500 °C, vorzugsweise unter 450 °C innerhalb von 2 min., vorzugsweise innerhalb von 1 min. und eine anschließende Behandlung mit TEOS wie oben beschrieben ausreichend ist, um eine besser haltbare Beschichtung des Glasfasertextils, insbesondere des Glasfasergewebes bei ausreichend guten mechanischen Eigenschaften zu gewährleisten. Eine Entfernung des Schlichte mit Hilfe von Lösungsmitteln oder Reinigergemischen in Wasser ist unter besonderen Bedingungen ebenfalls möglich.

Die zur Herstellung der Beschichtung verwendete Suspension weist zumindest eine anorganische Komponente und zumindest ein Sol, zumindest ein Halbmetalloxidsol oder zumindest ein Mischmetalloxidsol oder eine Mischung dieser Sole auf, und wird durch Suspendieren zumindest einer anorganischen Komponente in zumindest einem dieser Sole hergestellt.

Die Sole werden durch Hydrolisieren zumindest einer Verbindung, vorzugsweise zumindest einer Metallverbindung, zumindest einer Halbmetallverbindung oder zumindest einer Mischmetallverbindung mit zumindest einer Flüssigkeit, einem Feststoff oder einem Gas erhalten, wobei es vorteilhaft sein kann, wenn als Flüssigkeit z. B. Wasser, Alkohol oder eine Säure, als Feststoff Eis oder als Gas Wasserdampf oder zumindest eine Kombination dieser Flüssigkeiten, Feststoffe oder Gase eingesetzt wird. Ebenso kann es vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung, ein Metallnitrat, ein Metallchlorid, ein Metallcarbonat oder zumindest eine Halbmetallalkoholatverbindung ausgewählt aus den Verbindungen der Elemente Zr, Al, Si, Sn, Ce und Y oder der Lanthanoiden und Actinoiden, wie z. B. Zikonalkoholate, wie z. B. Zirkonisopropylat, Siliziumalkoholate, oder ein Metallnitrat, wie z. B. Zirkoniumnitrat, hydrolisiert.

Es kann vorteilhaft sein, die Hydrolyse der zu hydrolisierenden Verbindungen mit zumindest dem halben Molverhältnis Wasser, Wasserdampf oder Eis, bezogen auf die hydrolisierbare Gruppe, der hydrolisierbaren Verbindung, durchzuführen.

Die hydrolisierte Verbindung kann zum Peptisieren mit zumindest einer organischen oder anorganischen Säure, vorzugsweise mit einer 10 bis 60 %-igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

Es können nicht nur Sole verwendet werden, die wie oben beschrieben hergestellt wurden, sondern auch handelsübliche Sole, wie z. B. Zirkonnitratsol oder Silicasol.

Es kann vorteilhaft sein, wenn zumindest eine anorganische Komponente, welche eine Korngöße von 1 bis 10000 nm, vorzugsweise von 1 bis 10 nm, 10 bis 100 nm, 100 bis 1000 nm oder 1000 bis 10000 nm, besonders bevorzugt von 250 bis 1750 nm und ganz besonders bevorzugt von 300 bis 1250 nm aufweist, in zumindest einem Sol suspendiert wird.

Durch die Verwendung von anorganischen Komponenten, die eine Korngröße von 300 bis 1250 nm aufweisen, wird eine besonders gut geeignete Biegsamkeit und Porosität des Separators erreicht.

Vorzugsweise wird eine anorganische Komponente, die zumindest eine Verbindung, ausgewählt aus Metallverbindungen, Halbmetallverbindungen, Mischmetallverbindungen und Metallmischverbindungen mit zumindest einem der Elemente der 3. bis 7. Hauptgruppe, oder zumindest eine Mischung dieser Verbindungen aufweist, suspendiert. Besonders bevorzugt wird zumindest eine anorganische Komponente, die zumindest eine Verbindung aus den Oxiden der Nebengruppenelemente oder den Elementen der 3. bis 5. Hauptgruppe, vorzugsweise Oxide ausgewählt aus den Oxiden der Elemente Sc, Y, Zr, Nb, Ce, V, Cr, Mo, W, Mn, Fe, Co, B, Al, In, Tl, Si, Ge, Sn, Pb und Bi, wie z. B. Y₂O₃, ZrO₂, Fe₂O₃, Fe₃O₄, SiO₂, Al₂O₃ aufweist, suspendiert.

Vorzugsweise beträgt der Massenanteil der suspendierten Komponente das 0,1 bis 500-fache, besonders bevorzugt das 1 bis 50-fache und ganz besonders bevorzugt das 5 bis 25-fache des eingesetzten Sols.

Durch die geeignete Wahl der Korngröße der suspendierten Verbindungen in Abhängigkeit von der Größe der Poren, Löcher oder Zwischenräume des Substrates, aber auch durch die Schichtdicke des erfindungsgemäßen Separators sowie das anteilige Verhältnis Sol-Lösungsmittel-Metalloxid läßt sich die Rißfreiheit im erfindungsgemäßen Separator optimieren. Die Art und Größe der eingesetzten suspendierten Verbindung ist entscheidend für die Eigenschaften des Separators. So werden durch die Korngröße direkt der mittlere Porenradius und dadurch dann der Widerstand des mit Elektrolyt benetzten Separators festgelegt. Die Art der eingesetzten Verbindung entscheidet über die Benetzbarkeit des Separators durch den Elektrolyten. Je besser die Benetzbarkeit des Separators ist desto besser ist dieser als Separator geeignet. Zudem kann dieser Separator durch gezielte Modifizierung der Oberfläche dem jeweiligen Elektrolyten angepasst werden. Es können also die Eigenschaften maßgeschneidert eingestellt werden.

Die erfindungsgemäße Beschichtung wird durch Verfestigen der Suspension in und auf dem Substrat auf das Substrat aufgebracht. Erfindungsgemäß kann die auf und im Substrat vorhandene Suspension durch Erwärmen auf 50 bis 1000 °C verfestigt werden. In einer besonderen Ausführungsvariante des erfindungsgemäßen Verfahrens wird die auf und im Support vorhandene Suspension durch Erwärmen auf 50 bis 1000 °C, vorzugsweise durch Erwärmen auf 300 bis 700 °C und ganz besonders bevorzugt durch Erwärmen auf 350 bis 390 °C, 400 bis 440 °C, 450 bis 490 °C, 500 bis 540 °C, 550 bis 590 °C oder 600 bis 650 °C verfestigt. Es kann vorteilhaft sein, wenn das Erwärmen für 10 min. bis 5 Stunden bei einer Temperatur von 50 bis 100 °C erfolgt oder wenn das Erwärmen für 1 Sekunde bis 10 Minuten bei einer Temperatur von 100 bis 800 °C erfolgt. Besonders bevorzugt erfolgt das Erwärmen der Suspension zum Verfestigen auf eine Temperatur von 300 bis 700 °C für 0,5 bis 2 min, vorzugsweise von 0,75 bis 1,5 min. Ganz besonders bevorzugt erfolgt das Erwärmen der Suspension zum Verfestigen auf eine Temperatur von 400 bis 440 °C für 1,5 bis 1 min., auf eine Temperatur von 450 bis 490 °C für 1,4 bis 0,9 min., auf eine Temperatur von 500 bis 540 °C für 1,3 bis 0,8 min. und auf eine Temperatur von 550 bis 590 °C für 1,2 bis 0,7 min.

Das erfindungsgemäße Erwärmen des Verbundes kann mittels erwärmter Luft, Heißluft, Infrarotstrahlung oder Mikrowellenstrahlung erfolgen.

Das erfindungsgemäße Verfahren kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Support bringt und zumindest eine weitere Apparatur, welche das Verfestigen der Suspension auf und in dem Support durch Erwärmen ermöglicht, durchläuft und der so hergestellte Separator auf einer zweiten Rolle aufgerollt wird. Auf diese Weise ist es möglich, den erfindungsgemäßen Separator im Durchlaufverfahren herzustellen.

Erfindungsgemäße Separatoren können als Separatoren in Batterien verwendet werden. Bei der erfindungsgemäßen Verwendung des Separators als Separator in Batterien wird der Separator üblicherweise mit dem Elektrolyten getränkt zwischen der Anode und der Kathode plaziert.

Der erfindungsgemässe Separator ist für sekundäre (wiederaufladbare) Lithium-Batterien geeignet. Unter anderem ist der erfindungsgemäße Separator geeignet als Separator in Batterien, die das System Li/LiAlCl₄ x SO₂/LiCoO₂ verwenden, eingesetzt zu werden. Diese Batterien weisen eine Lithiumkobaltoxid-Elektrode (positive Masse), in die Lithiumionen reversibel ein- und ausgelagert werden können (Interkalationselektrode). Bei der Ladung des Systems werden die Lithiumionen aus der Interkalationselektrode ausgelagert und metallisch, im allgemeinen dendritisch, auf einem Ableiter (negative Masse) abgeschieden. Andere Lithiumbatteriesysteme sind natürlich ebenso mit dem erfindungsgemäßen Separator realisierbar. Wie beispielsweise Systeme mit Lithiummanganoxid oder Lithiumnickeloxid als Interkalationselektroden, mit Kohlenstoffmaterialien als negative Masse, die das Lithium reversibel einlagern, und anderen Elektrolyten, wie LiPF₆ u. ä.

Der erfindungsgemäße Separator ist allerdings nicht auf derartige Batteriesysteme beschränkt, sondern kann auch beispielsweise in Systemen wie Nickelmetallhydrid-, Nickel-Cadmiumoder Bleiakkumulatoren eingesetzt werden.

Besonders geeignet ist der erfindungsgemäße Separator für einen Einsatz in Batteriesystemen, mit höheren erlaubten Betriebstemperaturen, wie z. B. Lithium-Batterien, im Automobilen Bereich. Wie bereits eingangs erwähnt, kann bei der Verwendung von erfindungsgemäßen Separatoren die Rückspeisung von Bremsenergie ohne Unterbrechung erfolgen, da keine negativen Auswirkungen der bei der Einspeisung auftretenden hohen Temperatur auf den Separator zu befürchten sind. Dadurch kann die gesamte Bremsenergie in die Batterie eingespeist werden und nicht nur ein Teil wie bei Polymerseparatoren.

Ebenso gut geeignet sind die erfindungsgemäßen Separatoren für den Einsatz in Batterien die schnell aufgeladen werden sollen. Durch die hohe Temperaturbeständigkeit des erfindungsgemäßen Separators ist eine Batterie, die mit diesem Separator ausgerüstet ist, deutlich schneller aufzuladen. Dies ist ein deutlicher Vorteil beim Einsatz solcher Art ausgerüsteter Batterien in Elektrofahrzeugen, da diese nicht mehr über 12 Stunden oder noch längere Zeiträume geladen werden müssen, sondern das Aufladen innerhalb von deutlich kürzeren Zeiträumen durchführbar ist.

Durch Anpassung der Ausgangsmaterialien oder durch Nachbehandlung der keramischen Schicht kann verschiedenen chemischen und technischen Ansprüchen Rechnung getragen werden. So kann beispielsweise durch Nachbehandlung oder durch Umsetzung mit entsprechenden chemischen Gruppen, die dem Fachmann bekannt sind, eine hydrophile oder hydrophobe Beschichtung erzeugt werden.

Die vorliegende Erfindung wird durch die nachfolgenden Beispiele beschrieben, ohne darauf beschränkt zu sein.

### Beispiel 1.1

In einem Becherglas werden 300g VE-Wasser mit 50g Ethanol und 1,2g Zirkonacetylacetonat vorgelegt. Anschließend werden 280g Al₂O₃ (ct 3000 der Fa. Alcoa, Ludwigshafen) unter rühren portionsweise zugegeben. Die so erhaltene Suspension wird ca. 24h gerührt. Dann gibt man 150g Zirkonsol (Fa. MEL) zu und verrührt alles gut. Danach kann das Sol zur Membran verarbeitet werden.

### Beispiel 1.2

In einem Becherglas werden 300g VE-Wasser mit 50g Ethanol und 1,2g Zirkonacetylacetonat vorgelegt. Anschließend werden 280g Al₂O₃ (MR 32 der Fa. Martinswerke) unter rühren portionsweise zugegeben. Die so erhaltene Suspension wird ca. 24h gerührt. Dann gibt man 150g Zirkonsol zu und verrührt alles gut. Danach kann das Sol zur Membran verarbeitet werden.

### Beispiel 1.3

70 g Tetraethoxysilan werden mit 20 g Wasser hydrolysiert und mit 20 g Salpetersäure (25 %-ig) peptisiert. Diese Lösung wird bis zum Klarwerden gerührt und nach Zugabe von 70 g amorpher Kieselsäure oder amorphem Siliziumdioxids (Aerosil 90 der Fa. Degussa) bis zum Auflösen der Agglomerate gerührt und die Suspension wird anschließend verwendet.

### Beispiel 1.4

In einem Becherglas werden 300g VE-Wasser mit 50g Ethanol und 1,2g Zirkonacetylacetonat vorgelegt. Anschließend werden 450g Al₂O₃ (ct 1200 der Fa. Alcoa) unter rühren portionsweise zugegeben. Die so erhaltene Suspension wird ca. 24h gerührt. Dann gibt man das 150g Zirkonsol (Fa. MEL) zu und verrührt alles gut. Danach kann das Sol zur Membran verarbeitet werden.

### Beispiel 1.5

100 g Silicasol (Levasil 200, der Fa. Bayer AG) wurden mit 180 g Aluminiumoxid AA07 der Fa. Sumitomo Chemical bis zum Auflösen der Agglomerate gerührt. Die Suspension kann anschließend verwendet werden.

### Beispiel 2.1

Ein aus 11 tex Garnen (S2-Glas der Fa. AGY) hergestelltes Glasfasergewebe, welches 10 bis 30 Kettfäden /cm und 10 bis 30 Schußfäden/cm besitzt, wurde bei 450 °C für 1 min in Gegenwart von Luftsauerstoff behandelt, um die Schlichte abzubrennen. Das Gewebe wurde mit einer TEOS-Lösung, bestehend aus 1,5 % vorkondensiertem TEOS in Ethanol, besprüht und die Lösung anschließend bei 50 °C getrocknet. Nach dem Trocknen wurde das Gewebe nochmals bei 450 °C für 1 min. in Gegenwart von Luftsauerstoff behandelt. Es wurde ein mit Siliziumdioxid beschichtetes Glasfasergewebe erhalten. (genauso kann bei der Beschichtung mit ZrO₂ (Einsatzstoff Zirkonacetylacetonat in Ethanol) und Al₂O₃ (Einsatzstoff Aluminiumethanolat in Ethanol) jeweils von der Fa. Merck, verfahren werden.

### Beispiel 2.2 (Vergleichsbeispiel)

Der Versuch aus Beispiel 2.1 wurde wiederholt, wobei ein Gewebe, welches aus 5 bis 30 Kettfäden/cm und 5 bis 30 Schussfäden/cm eines 5,5 tex Garns (E-Glas der Fa. AGY) besteht und ein Gemisch aus 1% TEOS und 0,5% Titantetraisopropylat (Fa. Merck) eingesetzte wurde. Es wurde ein deutlich dünneres, mit einem Oxidgemisch beschichtetes Glasgewebe erhalten.

### Beispiel 2.3

Von einem Gewebe wie aus Beispiel 2.1 wurde durch Abbrennen für 1 min. in Gegenwart von Luftsauerstoff und anschließendes Tempern bei 300 °C für 4 Tage die Schlichte entfernt. Man erhielt ein Glasfasergewebe ohne Schlichte.

### Beispiel 2.4 (Vergleichsbeispiel)

Von einem Gewebe wie aus Beispiel 2.2 wurde durch Abbrennen für 1 min. in Gegenwart von Luftsauerstoff und anschließendes Tempern bei 300 °C für 4 Tage die Schlichte entfernt. Man erhielt ein Glasfasergewebe ohne Schlichte.

### Beispiel 3.1

Eine Suspension nach Beispiel 1.1 wird auf ein Gewebe gemäß Beispiel 2.1 aufgerakelt und durch Beblasen mit heißer Luft, die eine Temperatur von 450 °C aufwies, innerhalb von 7 sec. getrocknet. Es wurde ein flächiger Separator erhalten, der ohne Beschädigung bis zu einem Radius von 10 mm biegbar war. Die Gurley-Zahl dieses Separators, der eine Porengröße von ca. 100 nm hatte, betrug 15.

### Beispiel 3.2

Eine Suspension nach Beispiel 1.2 wird auf ein Gewebe gemäß Beispiel 2.3 aufgerakelt und durch Beblasen mit heißer Luft, die eine Temperatur von 450 °C aufwies, innerhalb von 7 sec. getrocknet. Es wurde ein flächiger Separator erhalten, der ohne Beschädigung bis zu einem Radius von 10 mm biegbar war. Die Gurley Zahl dieses Separators, der eine Porengröße von ca. 80 nm hatte, betrug 19.

### Beispiel 3.3 (Vergleichsbeispiel)

Eine Suspension nach Beispiel 1.3 wird auf ein Gewebe gemäß Beispiel 2.4 aufgerakelt und durch Beblasen mit heißer Luft, die eine Temperatur von 450 °C aufwies, innerhalb von 7 sec. getrocknet. Es wurde ein flächiger Separator erhalten, der ohne Beschädigung nur bis zu einem Radius von 25 mm biegbar war. Die Gurley Zahl dieses Separators, der eine Porengröße von ca. 50 nm hatte, betrug 33.

### Beispiel 3.4

Eine Suspension nach Beispiel 1.4 wird auf ein Gewebe gemäß Beispiel 2.3 aufgerakelt und durch Beblasen mit heißer Luft, die eine Temperatur von 450 °C aufwies, innerhalb von 7 sec. getrocknet. Es wurde ein flächiger Separator erhalten, der ohne Beschädigung nur bis zu einem Radius von 25 mm biegbar war. Die Gurley Zahl dieses Separators, der eine Porengröße von ca. 250 nm hatte, betrug 5.

### Beispiel 3.5 (Vergleichsbeispiel)

Eine Suspension nach Beispiel 1.1 wird auf ein Gewebe gemäß Beispiel 2.2 aufgerakelt und durch Beblasen mit heißer Luft, die eine Temperatur von 450 °C aufwies, innerhalb von 7 sec. getrocknet. Es wurde ein flächiger Separator erhalten, der ohne Beschädigung bis zu einem Radius von 10 mm biegbar war. Die Gurley Zahl dieses Separators, der eine Porengröße von ca. 100 nm hatte, betrug 12.

## Patentansprüche

1. Separator, umfassend ein flächiges; mit einer Vielzahl von Öffnungen versehenes, flexibles Substrat mit einer auf und in diesem Substrat befindlichen Beschichtung, wobei das Material des Substrates ausgewählt ist aus gewebten, nicht elektrisch leitfähigen Fasern von Glas und die Beschichtung eine poröse, elektrisch isolierende, keramische Beschichtung ist,
**dadurch gekennzeichnet,**
**dass** das Substrat ein Glasfasergewebe aus gewebten Fasern oder Filamenten ist, welches aus 2 bis 20 tex Garnen hergestellt wurde und von 5 bis 30 Schussfäden/cm und von 5 bis 30 Kettfäden/cm aufweist und der Separator eine Dicke von kleiner 100 µm aufweist.

2. Separator gemäß Anspruch 1,
**dadurch gekennzeichnet,**
**dass** der Separator eine Dicke von kleiner 50 µm aufweist.

3. Separator gemäß Anspruch 1 oder 2,
**dadurch gekennzeichnet,**
**dass** die Fasern oder Filamente ausgewählt sind aus E-, R- oder S-Glas.

4. Separator gemäß Anspruch 3,
**dadurch gekennzeichnet,**
**dass** die Fasern oder Filamente mit SiO₂, ZrO₂ oder Al₂O₃ oder mit Gemischen dieser Oxide beschichtet sind.

5. Separator gemäß Anspruch 3 oder 4,
**dadurch gekennzeichnet,**
**dass** das Glasfasergewebe aus 5,5 oder 11 tex Garnen hergestellt wurde.

6. Separator gemäß zumindest einem der Ansprüche 1 bis 5, .
**dadurch gekennzeichnet,**
**dass** die auf und in dem Substrat befindliche Beschichtung ein Oxid, Nitrid, Carbid der Metalle Al, Zr, Si, Sn, Ce, Mg, Hf, B und/oder Y, aufweist.

7. Separator gemäß zumindest einem der Ansprüche 1 bis 6,
**dadurch gekennzeichnet,**
**dass** der Separator eine Reißfestigkeit von 5 N/cm bis 500 N/cm aufweist.

8. Separator gemäß zumindest einem der Ansprüche 1 bis 7,
**dadurch gekennzeichnet,**
**dass** der Separator ohne Beschädigung bis auf einen Radius bis herab zu 100 mm biegbar ist.

9. Verfahren zur Herstellung eines Separators gemäß zumindest einem der Ansprüche 1 bis 8,
**dadurch gekennzeichnet,**
**dass** ein flächiges, mit einer Vielzahl von Öffnungen versehenes, flexibles Substrat in und auf diesem Substrat mit einer Beschichtung versehen wird, wobei das Material des Substrates ein Gewebe aus gewebten Glasfasern ist, welches aus Fäden mit einer Stärke von maximal 20 tex hergestellt wurde und von 5 bis 30 Schussfäden pro cm und von 5 bis 30 Kettfäden pro cm, aufweist, und die Beschichtung eine poröse, elektrisch isolierende, keramische Beschichtung ist

10. Verfahren gemäß Anspruch 9,
**dadurch gekennzeichnet,**
**dass** auf das Substrat durch Aufbringen einer Suspension, die zumindest, eine Verbindung zumindest eines Metalls, eines Halbmetalls oder eines Mischmetalls mit zumindest einem Element der 3. bis 7. Hauptgruppe aufweisende, anorganische Komponente und ein Sol aufweist, auf das Substrat und durch zumindest einmaliges Erwärmen, bei welchem die zumindest eine anorganische Komponente aufweisende Suspension auf oder im oder aber auf und im Träger verfestigt wird, eine Beschichtung aufgebracht wird.

11. Verfahren nach Anspruch 10,
**dadurch gekennzeichnet,**
**dass** die Suspension durch Aufdrucken, Aufpressen, Einpressen Aufröllen, Aufrakeln, Aufstreichen, Tauchen, Spritzen oder Aufgießen auf und in das Substrat gebracht wird.

12. Verfahren nach zumindest einem der Ansprüche 9 bis 11,
. **dadurch gekennzeichnet,**
**dass** die Suspension, die zumindest eine anorganische Komponente und zumindest ein Sol, zumindest ein Halbmetalloxidsol oder zumindest ein Mischmetalloxidsol oder eine Mischung dieser Sole aufweist, durch Suspendieren zumindest einer anorganischen Komponente in zumindest einem dieser Sole hergestellt wird.

13. Verfahren nach Anspruch 12,
**dadurch gekennzeichnet,**
**dass** die Sole durch Hydrolisieren zumindest einer Metallverbindung, zumindest einer Halbmetallverbindung oder zumindest einer Mischmetallverbindung mit Wasser, Wasserdampf, Eis, Alkohol oder einer Säure oder eine Kombination dieser Verbindungen erhalten werden.

14. Verfahren nach Anspruch 13,
**dadurch gekennzeichnet,**
**dass** zumindest eine Metallalkoholatverbindung oder zumindest eine Halbmetallalkoholatverbindimg ausgewählt aus den AllcohoIatverbindungen der Elemente Zr, Al, Si, Sn, Ce und Y oder zumindest ein Metallnitrat, Metallcarbonat oder Metallhalogenid ausgewählt aus den Metallsalzen der Elemente Zr, Al, Si, Sn, Ce und Y als Metallverbindung hydrolisiert wird.

15. Verfahren nach zumindest einem der Ansprüche 9 bis 14,
**dadurch gekennzeichnet,**
**dass** als anorganische Komponente, zumindest ein Oxid, ausgewählt aus den Oxiden der Elemente Sc, Y, Zr, V, Cr, Nb, Mo, W, Mn, Fe, Ce, Co, B, Al, In, Tl, Si, Ge, Sn, Pb und Bi, suspendiert wird.

16. Verfahren nach zumindest einem der Ansprüche 12 bis 15,
**dadurch gekennzeichnet,**
**dass** der Massenanteil der suspendierten Komponente dem 0,1 bis 500-fachen des eingesetzten Sols entspricht.

17. Verfahren nach zumindest einem der Ansprüche 9 bis 16,
**dadurch gekennzeichnet,**
**dass** die auf und im Substrat vorhandene Suspension durch Erwärmen auf 50 bis 1000 °C verfestigt wird.

18. Verfahren nach Anspruch 17,
**dadurch gekennzeichnet,**
**dass** das Erwärmen für 10 min. bis 5 Stunden bei einer Temperatur von 50 bis 100 °C erfolgt.

19. Verfahren nach Anspruch 17,
**dadurch gekennzeichnet,**
**dass** das Erwärmen für 1 Sekunde bis 10 Minuten bei einer Temperatur von 100 bis 800 °C erfolgt.

20. Verwendung eines Separators gemäß zumindest einem der Ansprüche 1 bis 8 als Separator in Batterien.

## Claims

1. A separator comprising a sheetlike flexible substrate having a multiplicity of openings and having a coating on and in said substrate, the material of the substrate being selected from woven non-electroconductive fibres of glass and the coating being a porous electrically insulating ceramic coating,
**characterized**
**in that** the substrate is a glass fibre fabric composed of woven fibres or filaments which was produced from 2 to 20 tex yarns and has from 5 to 30 weft threads/cm and from 5 to 30 warp threads/cm, and the separator has a thickness of less than 100 µm.

2. A separator according to claim 1,
**characterized**
**in that** the separator has a thickness of less than 50 µm.

3. A separator according to claim 1 or 2,
**characterized**
**in that** the fibres or filaments are selected from E-, R- or S-glass.

4. A separator according to claim 3,
**characterized**
**in that** the fibres or filaments are coated with SiO₂, ZrO₂ or Al₂O₃ or with mixtures thereof.

5. A separator according to claim 3 or 4,
**characterized**
**in that** the glass fibre fabric was produced from 5.5 or 11 tex yarns.

6. A separator according to at least one of claims 1 to 5,
**characterized**
**in that** the coating on and in the substrate comprises an oxide, nitride or carbide of the metals Al, Zr, Si, Sn, Ce, Mg, Hf, B, Ti and/or Y.

7. A separator according to at least one of claims 1 to 6,
**characterized**
**in that** the separator has a breaking strength of 5 N/cm to 500 N/cm.

8. A separator according to at least one of claims 1 to 7,
**characterized**
**in that** the separator is bendable around a radius down to 100 mm without damage.

9. A process for producing a separator according to at least one of claims 1 to 8,
**characterized**
**in that** a sheetlike flexible substrate having a multiplicity of openings is provided with a coating on and in said substrate, the material of the substrate being a fabric composed of woven glass fibres which was produced from threads having a linear density of not more than 20 tex and has from 5 to 30 weft threads/cm and from 5 to 30 warp threads/cm, and the coating being a porous electrically insulating ceramic coating.

10. A coating according to claim 9,
**characterized**
**in that** a coating is provided by applying to the substrate a suspension comprising at least one inorganic component comprising a compound of at least one metal, one semimetal or one mixed metal with at least one element of the 3rd to 7th main group and a sol and heating one or more times to solidify the suspension comprising at least one inorganic component on or in or else on and in the support.

11. A process according to claim 10,
**characterized**
**in that** the suspension is brought onto and into the substrate by printing on, pressing on, pressing in, rolling on, knifecoating on, spreadcoating on, dipping, spraying or pouring on.

12. A process according to at least one of claims 9 to 11,
**characterized**
**in that** the suspension, which comprises at least one inorganic component and at least one sol, at least one semimetal oxide sol or at least one mixed metal oxide sol or a mixture thereof, is prepared by suspending at least one inorganic component in at least one of these sols.

13. A process according to claim 12,
**characterized**
**in that** the sols are obtained by hydrolysing at least one metal compound, at least one semimetal compound or at least one mixed metal compound using water, water vapour, ice, alcohol or an acid or a combination thereof.

14. A process according to claim 13,
**characterized**
**in that** the metal compound hydrolysed is at least one metal alkoxide compound or at least one semimetal alkoxide compound selected from the alkoxide compounds of the elements Zr, Al, Si, Sn, Ce and Y or at least one metal nitrate, metal carbonate or metal halide selected from the metal salts of the elements Zr, Al, Si, Sn, Ce and Y.

15. A process according to at least one of claims 9 to 14,
**characterized**
**in that** the inorganic component suspended is at least one oxide selected from the oxides of the elements Sc, Y, Zr, V, Cr, Nb, Mo, W, Mn, Fe, Ce, Co, B, Al, In, Tl, Si, Ge, Sn, Pb and Bi.

16. A process according to at least one of claims 12 to 15,
**characterized**
**in that** the mass fraction of the suspended component is from 0.1 to 500 times that of the sol used.

17. A process according to at least one of claims 9 to 16,
**characterized**
**in that** the suspension on and in the substrate is solidified by heating to from 50 to 1000°C.

18. A process according to claim 17,
**characterized**
**in that** the heating is effected at from 50 to 100°C for from 10 min to 5 hours.

19. A process according to claim 17,
**characterized**
**in that** the heating is effected at from 100 to 800°C for from 1 second to 10 minutes.

20. The use of a separator according to at least one of claims 1 to 8 as a separator in batteries.

## Revendications

1. Séparateur, comprenant un substrat flexible, plat, doté d'un grand nombre d'ouvertures, avec un revêtement se trouvant sur et dans ce substrat, la matière du substrat étant choisie parmi des fibres de verre non électriquement conductrices, tissées, et le revêtement étant un revêtement céramique, électriquement isolant, poreux,
**caractérisé en ce que**
le substrat est un tissu de fibres de verre constitué de fibres ou de filaments tissés, qui a été fabriqué avec des fils de 2 à 20 tex et présente 5 à 30 fils de trame/cm et de 5 à 30 fils de chaîne/cm, et le séparateur a une épaisseur inférieure à 100 µm.

2. Séparateur selon la revendication 1,
**caractérisé en ce que**
le séparateur a une épaisseur inférieure à 50 µm.

3. Séparateur selon la revendication 1 ou 2,
**caractérisé en ce que**
les fibres ou filaments sont choisis parmi du verre E, R ou S.

4. Séparateur selon la revendication 3,
**caractérisé en ce que**
les fibres ou filaments sont revêtus de SiO₂, ZrO₂ ou Al₂O₃ ou de mélanges de ces oxydes.

5. Séparateur selon la revendication 3 ou 4,
**caractérisé en ce que**
le tissu de fibres de verre a été fabriqué avec des fils de 5,5 ou 11 tex.

6. Séparateur selon au moins l'une quelconque des revendications 1 à 5,
**caractérisé en ce que**
le revêtement se trouvant sur et dans le substrat comporte un oxyde, un nitrure, un carbure des métaux Al, Zr, Si, Sn, Ce, Mg, Hf, B et/ ou Y.

7. Séparateur selon au moins l'une quelconque des revendications 1 à 6,
**caractérisé en ce que**
le séparateur présente une résistance à la rupture de 5 N/cm à 500 N/cm.

8. Séparateur selon au moins l'une quelconque des revendications 1 à 7,
**caractérisé en ce que**
le séparateur peut être courbé sans détérioration jusqu'à un rayon de 100 mm.

9. Procédé de fabrication d'un séparateur selon au moins l'une quelconque des revendications 1 à 8,
**caractérisé en ce qu'**
un revêtement est doté dans et sur un substrat flexible, plat, d'un grand nombre d'ouvertures, la matière de ce substrat étant un tissu de fibres de verre tissées, qui a été fabriqué avec des fils d'une épaisseur maximum de 20 tex, et présente de 5 à 30 fils de trame par cm et de 5 à 30 fils de chaîne par cm, et le revêtement étant un revêtement céramique électriquement isolant, poreux.

10. Procédé selon la revendication 9,
**caractérisé en ce qu'**
un revêtement est appliqué sur le substrat par application d'une suspension qui présente, au moins un composant inorganique comportant un composé au moins d'un métal, d'un semi-métal ou d'un métal mixte avec au moins un élément des groupes principaux 3 à 7, et un sol, et par au moins un chauffage au cours duquel la suspension comportant au moins un composant inorganique est solidifiée sur ou dans, ou même sur et dans le support.

11. Procédé selon la revendication 10,
**caractérisé en ce que**
la suspension est appliquée sur et dans le substrat par compression, pressage, introduction par pression, au rouleau, à la racle, par enduction, par immersion, par pulvérisation, ou par coulée.

12. Procédé selon au moins l'une quelconque des revendications 9 à 11,
**caractérisé en ce que**
la suspension qui présente au moins un composant inorganique et au moins un sol, au moins un sol d'oxyde de semi-métal ou au moins un sol d'oxyde de métal mixte, ou un mélange de ces sols, est préparée par mise en suspension d'au moins un composant inorganique dans au moins un de ces sols.

13. Procédé selon la revendication 12,
**caractérisé en ce que**
les sols sont obtenus par hydrolyse d'au moins un composé métallique, au moins un composé de semi-métal ou au moins un composé de métal mixte avec de l'eau, de la vapeur d'eau, de la glace, de l'alcool ou un acide ou une combinaison de ces composés.

14. Procédé selon la revendication 13,
**caractérisé en ce qu'**
au moins un composé alcoolate métallique ou au moins un composé alcoolate de semi-métal, choisi parmi les composés alcoolates des éléments Zr, Al, Si, Sn, Ce et Y, ou au moins un nitrate métallique, un carbonate métallique ou un halogénure métallique, choisi parmi les sels métalliques des éléments Zn, Al, Si, Sn, Ce et Y est hydrolysé en tant que composé métallique.

15. Procédé selon au moins l'une quelconque des revendications 9 à 14,
**caractérisé en ce qu'**
on met en suspension, comme composant inorganique au moins un oxyde choisi parmi les oxydes des éléments Sc, Y, Zr, V, Cr, Nb, Mo, W, Mn, Fe, Ce, Co, B, Al, In, TI, Si, Ge, Sn, Pb et Bi.

16. Procédé selon au moins l'une quelconque des revendications 12, à 15,
**caractérisé en ce que**
la fraction en masse du composant en suspension correspond à 0,1 à 500 fois le sol utilisé.

17. Procédé selon au moins l'une quelconque des revendications 9 à 16,
**caractérisé en ce que**
la suspension présente sur et dans le substrat est solidifiée par chauffage à 50 à 1000°C.

18. Procédé selon la revendication 17,
**caractérisé en ce que**
le chauffage a lieu pendant 10 minutes à 5 heures à une température de 50 à 100°C.

19. Procédé selon la revendication 17,
**caractérisé en ce que**
le chauffage a lieu pendant une seconde à 10 minutes à une température de 100 à 800°C.

20. Utilisation d'un séparateur selon au moins l'une quelconque des revendications 1 à 8, en tant que séparateur dans des batteries.
